Europäisches Patentamt

**European Patent Office**

**Office européen des brevets**

(11) Publication number: **0 025 662**
**A1**

(12) **EUROPEAN PATENT APPLICATION**

(21) Application number: **80303037.8**

(22) Date of filing: **01.09.80**

(51) Int. Cl.³: **B 60 D 1/00**

(30) Priority: **14.09.79 GB 7931878**

(43) Date of publication of application: **25.03.81**
**Bulletin 81/12**

(84) Designated Contracting States: **DE FR GB IT NL**

(71) Applicant: **IMPERIAL CHEMICAL INDUSTRIES LIMITED,**
**Imperial Chemical House Millbank, London SW1P 3JF**
**(GB)**

(72) Inventor: **Chambers, Richard, 18 Boswell Road**
**Bessacarr, Doncaster South Yorkshire (GB)**

(74) Representative: **Hall, Robert et al, Imperial Chemical**
**Industries Limited Legal Department - Patents Thames**
**House North; Millbank, London SW1P 4QG (GB)**

(54) **Pivot connection for articulated tractor/trailer combination.**

(57) The trailer is towed by lower link arms (10) of the tractor.
Fixed collars (11, 12) are secured upon towing portion (5a) and
a plurality of spacing collars (13) is provided. By relocating the
collars (13) fore or aft the cross member (14) the pivot (4) can
be made equidistant from the centre of the axle of the trailer
and from the centre of the rear axle of the tractor so that the
trailer wheels follow as closely as possible the tracks made by
the tractor wheels. The height at which the trailer is connected
to the pivot pin can be increased or decreased by the use of
spacers (16).

Pivot connection for articulated tractor/trailer combination

The present invention relates to a pivot connection between a towing vehicle and a towed vehicle, particularly but not exclusively for agricultural tractor/trailer combinations of the type in which the trailer comprises, or has mounted thereon, a supply container for solid or liquid fertilizers, insecticides, fungicides or the like, seeds, etc., for distribution through drilling or spraying means (e.g. a spray-boom) or the like.

In such combinations, the tractor usually has a pair of relatively small front wheels and a pair of much larger rear wheels with rigid towing means (e.g. a tow-bar, draw-bar mounting or the like) extending rearwardly therefrom. The trailer usually has a single pair of wheels and forwardly-extending rigid towing means (e.g. a tow-bar, draw-bar or the like), and the free ends of the two towing means are pivotably connected to each other in such a way that, as the tractor turns (with its rear wheels describing arcs of concentric circles) the two towing means pivot relatively to one another about a substantially vertical axis and the wheels of the trailer turn in the same general direction as the rear wheels of the tractor. For reasons explained hereinafter, however, it is not sufficient, particularly when using the combination in growing crops or crops grown in rows, that the tractor wheels and the trailer wheels should merely turn "in the same general direction"; the trailer wheels should, in fact, follow as closely as possible in the tracks made by the tractor wheels so that damage to crops is minimised.

As a tractor passes to and fro across a field by itself, it is inevitable that the wheels (in particular the rear wheels, which are bigger and heavier than the front wheels) should create tracks in the earth and damage any crops already growing therein. This can be mitigated to some extent by always driving the tractor along existing tracks made during previous use of the tractor. At the end of each pass of the field, as the tractor is turning, the rear wheels do not follow precisely in the track of the front wheels, and the separate tracks of the front and rear wheels increase the damage to the earth and/or crops. The front wheels being comparatively small and light, however, this does not pose a serious problem.

However, if the tractor is towing a laden trailer (which is, of course, almost invariably the case) the problem becomes more acute since the laden trailer is heavy. During straight passes up and down a field, the trailer wheels will track the wheels of the tractor fairly closely and, apart from making tracks deeper and more obvious, the damage is not too severe. However, when the tractor/trailer combination turns at the end of each pass very considerable damage may be done, since the trailer wheels do not follow closely in the tracks of either the rear or the front wheels of the tractor and the earth and/or crops can be badly cut up by a large number of tracks.

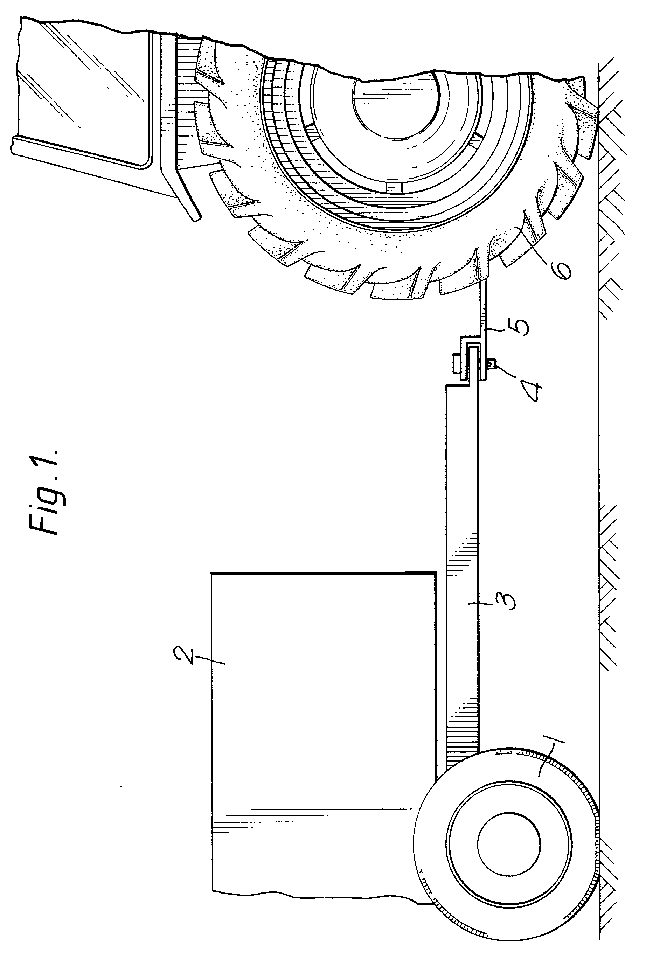

However, it is possible to cause the trailer wheels to follow substantially exactly in the tracks of the rear wheels of the tractor by locating the articulated pivot connection between the tractor and trailer substantially equidistant from the centre of the rear axle of the tractor and from the centre of the axle of the trailer. In these circumstances, when the tractor/trailer combination is turning, the longitudinal centre line of the tractor (and its rearwardly-extending towing means) and the longitudinal centre line of the trailer (and its forwardly-extending towing means) each forms a tangent to a turning circle which is described by both the mid-point of the rear axle of the tractor and by the mid-point of the axle of the trailer. The trailer wheels follow very closely in the track of the tractor rear wheels and this avoids the creation of additional tracks by the trailer. This is a matter of simple geometry and is described in further detail hereinafter with reference to Fig. 1 of the drawings.

The provision of such an equidistant articulated pivot connection is simple if the trailer is intended to be used with only one specific tractor or size of tractor. However, if it is desired to provide a trailer which can be used with tractors of different designs or sizes, this runs into the difficulty that the length of the tractor's towing means from the free end thereof to the centre of the rear axle of the tractor will not be the same for all tractors and will not always be the same as the length of the trailer's towing means from the free end thereof to the centre of the axle of the trailer. The object of the present invention is to overcome this difficulty.

We have now devised a way of overcoming this difficulty by providing the towing means of the trailer or tractor with means for readily adjusting its effective length to a plurality of values, each related to one of a plurality of sizes and/or designs of tractor or trailer respectively, so that in all cases the pivot connection between the tractor and the trailer is substantially equidistant from the centre of the rear axle of the tractor and from the centre of the axle of the trailer.

As is clear from the above, it may be the effective length of the towing means of the trailer which is made adjustable; this will enable manufacturers of trailers to make their models in one size only which will be suitable for use with any size of tractor. It may, however, be the effective length of the towing means of the tractor which is made adjustable; this will enable tractor users to purchase and use any size of trailer without any constraints being imposed by the size of any trailer which they may already possess.

The present invention accordingly provides a vehicle provided with towing means which enables the vehicle to tow, or to be towed by, a second vehicle, the said towing means comprising a first portion rigidly attached to the vehicle and pivotably connected to a pivot or the like, and a second portion pivotably mounted on the said pivot or the like and extending away from the vehicle, the effective length of the said second portion being adjustable, and the free end of the said second portion being provided with means for connecting it to towing means provided on the second vehicle in such a way that the said second portion and the said second vehicle are unable to pivot horizontally in relation to each other, the arrangement being such that the effective length of the said second portion can be adjusted so that, in use, the said pivot or the like is substantially equidistant from the centre of the rear axle of the towing vehicle and from the centre of the axle of the towed vehicle.

The first-mentioned vehicle may be a trailer and the second vehicle a tractor, or vice versa, and some examples of methods of making the effective length of the said second portion adjustable are discribed hereinafter.

It will also be appreciated that if the rear wheels of the tractor are larger than the wheels of the trailer, the trailer will tilt backwardly which means that not only will it not be possible to fill the supply container fully but also that it will not be possible to empty it fully. If the wheels of the tractor are smaller than the wheels of the trailer, the trailer will tilt forwardly and the same problems will occur.

A further object of the invention is to overcome these additional problems, and we have devised the following ways of doing so.

The said second portion of the towing means of, for example, the towed vehicle is of substantially tee-shape, L-shape, or similar shape having a horizontal arm extending forwardly for connection with the towing means of the towing vehicle and its effective length is adjustable as described hereinabove, with a substantially vertical arm pivotably connected to the pivot or the like (to which the first portion of the towing means of the towed vehicle is also pivotably connected). The effective height of the vertical arm is adjustable to a plurality of values so that, despite differences in height between the towing vehicle and the towed vehicle, the said first portion of the towing means of the towed vehicle remains substantially horizontal and the towed vehicle does not tilt either forwardly or backwardly.

Alternatively, the said second portion of the towing means of the towing vehicle is of substantially tee-shape, L-shape, inverted L-shape, or similar shape having a horixontal arm extending rearwardly for connection with the towing means of the towed vehicle and its effective length is adjustable as described hereinabove, with a substantially vertical arm pivotably connected to the pivot or the like (to which the first portion of the towing means of the towing vehicle is also pivotably connected).

The invention is hereinafter described with reference to the accompanying drawings, wherein:-

Figure 1 illustrates a conventional pivot connection between a tractor and a trailer;

Figure 2 illustrates how the wheels of a trailer can be caused to follow closely in the track of the rear wheels of a tractor;

Figure 3 illustrates diagramatically one embodiment of the present invention with towing means of adjustable effective length in the horizontal sense; and Figure 3A is a plan view along the line A-A of Figure 3;

Figure 4 illustrates diagramatically an alternative embodiment to that shown in Figure 3; and

Figure 5 illustrates diagramatically an embodiment of the present invention in which the towing means is adjustable both horizontally and vertically.

Figure 1 illustrates a trailer comprising a pair of wheels 1 having mounted thereon a supply container 2 which is itself mounted on a support 3 which (as illustrated) acts as the first portion of the trailer towing means. It will be appreciated that a special tow-bar, draw-bar or the like could be mounted on the trailer instead of using the support 3 as the towing means. At its forward end the support 3 terminates in a pivot 4 where it is pivotably attached to a second forwardly-extending portion 5 of the towing means which is attached to or constitutes the draw-bar of the tractor (of which only the rear wheels 6 are shown) close to the rear axle thereof. When the tractor turns, the trailer will follow in the same general direction, pivoting about the pivot 4, but the trailer wheels 1 will not follow exactly in the tracks of the rear tractor wheels 6 except when they are both travelling in a straight line.

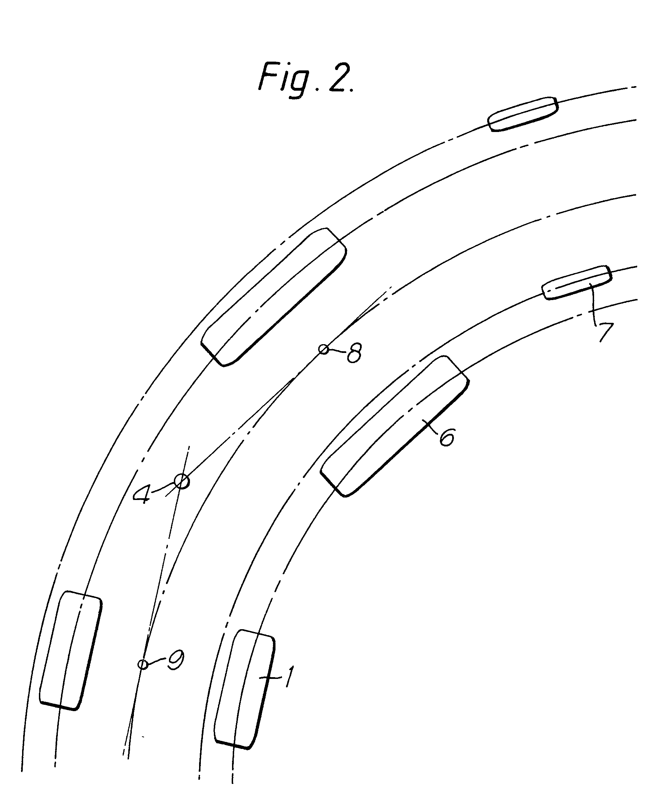

Figure 2 illustrates the wheels 1 of a trailer being towed by a tractor of which only the rear wheels 6 and the front wheels 7 are shown. The tractor is shown turning in an arc of a circle, and it will be seen that the rear wheels 6 are not following directly in the track of the front wheels 7. However, since the latter are comparatively small and light, this is not a serious problem. It is much more serious if the wheels 1 of the trailer do not follow directly in the track of the rear wheels 6 of the tractor. However, in Figure 2 the pivot 4 is situated equidistant from the points 8 and 9 which are, respectively, the centre of the axle of the tractor wheels 1 and the centre of the axle of the rear tractor wheels 6. In these circumstances, the line joining 4 and 8 and the line joining 4 and 9 each forms a tangent to a common circle, with the result that, as the tractor turns, the wheels 1 follow substantially in the tracks of the wheels 6. Reverting to Figure 1, it will be seen that although the portions 3 and 5 are each of constant length for any one trailer, the distance from the forward end of 5 to the centre of the rear axle of the rear wheels 6 of the tractor will not be the same for tractors of different designs and sizes, since there is not one standard size for the rear wheels of tractors.

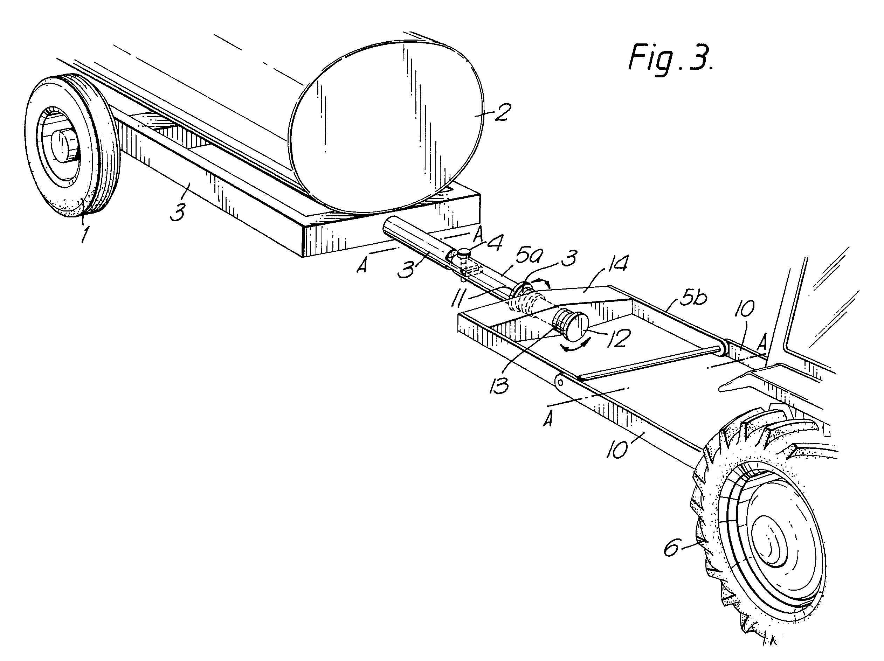

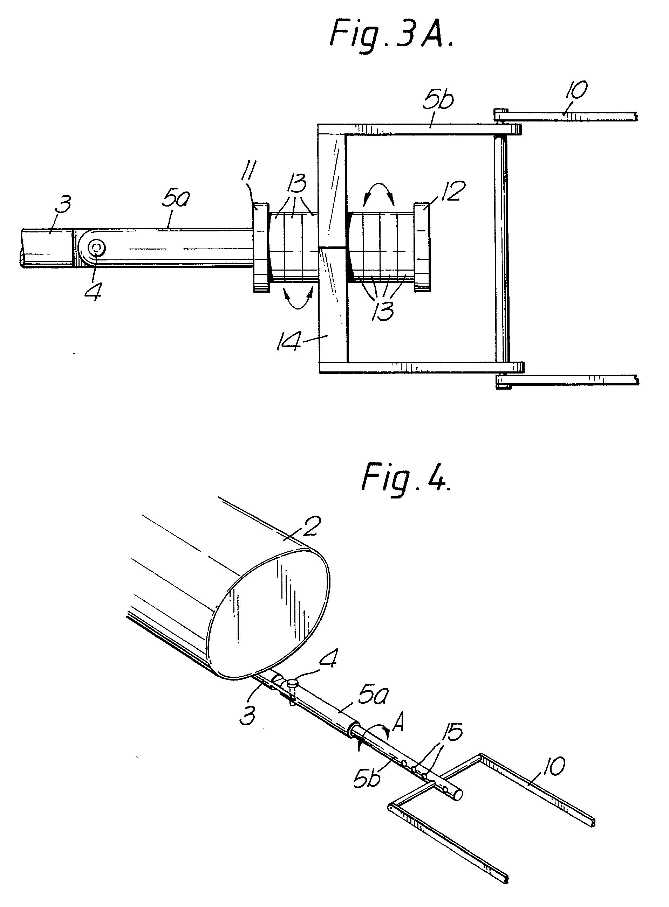

Figures 3, 3A and 4 exemplify how this difficulty can be overcome in two different ways (though these do not exhaust the possibilities).

In Figures 3 and 3A, part of the position 5 which comprised the tractor draw-bar is replaced by two separate portions 5a and 5b which are movable horizontally towards and away from each other. 5a is slidable and may be rotatable within 5b, so that undue rocking of the tractor is not transmitted to the trailer. The trailer is towed by lower link arms 10 of the tractor. Fixed collars 11 and 12 are secured upon 5a and a plurality of spacing collars 13 are provided between 11 and 12 and a fixed member, for example cross member 14 of portion 5b. By re-locating the collars 13 fore or aft of the cross member 14, the effective combined length of 5a and 5b can be decreased or increased. Hence, regardless of the design or size of the tractor and of its draw-bar mounting, the effective combined length of 5a and 5b can be adjusted so that the pivot 4 is always substantially equidistant from the centre of the axle of the trailer and from the centre of the rear axle of the tractor.

In Figure 4, substantially the same result is achieved by providing the forward end of 5b with a plurality of apertures 15 for receiving the draw-bar mounting of the tractor. The apertures 15 are spaced apart horizontally and the draw-bar mounting is threaded through whichever of them results in the pivot 4 being situated equidistant from the centre of the axle of the trailer and from the centre of the rear axle of the tractor. 5b is rotatable with 5a as indicated by the arrow A.

In an alternative to Figure 4 (not illustrated) the spaced apertures 15 at the forward end of 5b may be replaced by any conventional means for securing 5b to the tractor, in which case the adjustability of the effective length of 5a and 5b may be achieved by making 5b (or 5a, or both 5a and 5b) telescopic - i.e. by replacing 5b by two or more portions slidable within each other and providing means for locking them together so that the effective length of the telescopic 5b and 5a is increased or decreased as desired.

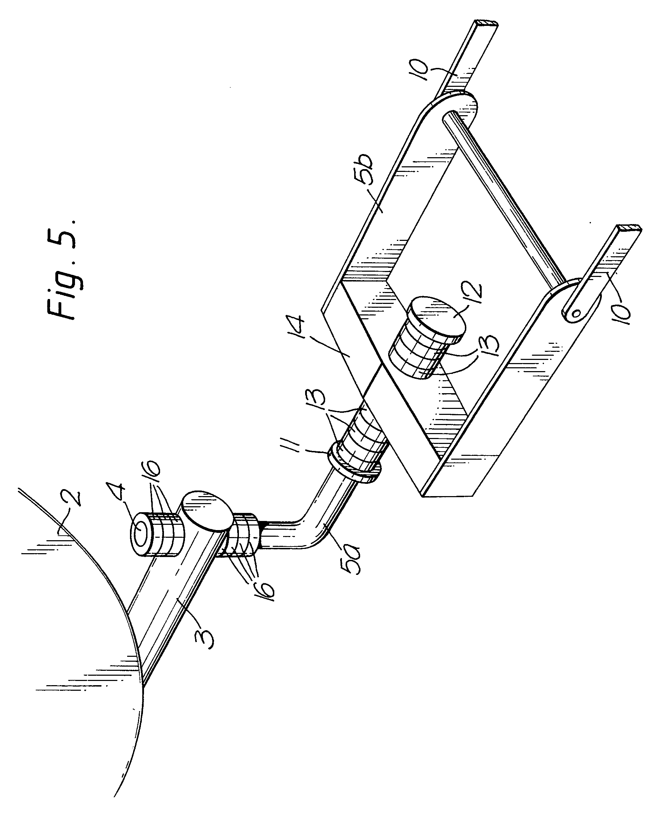

Figure 5 is similar to Figure 3, with the added feature that the tractor and trailer can be pivotably connected to the pivot at different heights so that, regardless of any difference in the sizes of their respective wheels, the supply container mounted on the trailer will remain substantially level, without tilting either forwardly or backwardly. In the embodiment shown, the pivot comprises an L-shaped pivot pin with the portion 5a forming the horizontal arm of the L and the vertical arm of the L having mounted thereon a plurality of spacers 16. By adding further spacers or by removing some or all of them, the effective height of the pivot pin, namely the height at which the trailer is connected to the pivot pin can be increased or decreased as required to maintain the supply container level. Alternatively, the pivot pin may be of inverted L-shape so that the spacers 16 are situated below the portion 5a; or the pivot pin may be horizontally-disposed tee-shaped (⊢-shaped) so that some of the spacers 16 are situated below the portion 5a and some of them above the portion 5a.

PA/RH/MP
4 August 1980

B 30960

1.        A vehicle provided with towing means which enables, the vehicle to tow, or to be towed by, a second vehicle, the said towing means comprising a first portion rigidly attached to the vehicle and pivotably connected to a pivot or the like, and a second portion pivotably mounted on the said pivot or the like and extending away from the vehicle, the effective length of the said second portion being adjustable, and the free end of the said second portion being provided with means for connecting it to towing means provided on the second vehicle in such a way that the said second portion and the said second vehicle are unable to move horizontally in relation to each other, the arrangement being such that the effective length of the said second portion can be adjusted so that, in use, the said pivot or the like is substantially equidistant from the centre of the rear axle of the towing vehicle and from the centre of the axle of the towed vehicle.

2.        A vehicle as claimed in claim 1, including means adapted to allow its towing means to rotate in a vertical plane relative to the towing means of the second vehicle, whereby rocking motion encountered by either vehicle is transmitted only in part, or not at all, to the other vehicle.

3.        A vehicle as claimed in claim 1 or claim 2, wherein the end of the said second portion remote from the said pivot is slidably mounted through a fixed member attached to the towing means of the second vehicle, and a plurality of spacing collars or the like are provided for addition to or removal from the said end of the said second portion whereby to increase or decrease respecively the effective length of the said second portion.

4.        A vehicle as claimed in claim 1 or claim 2, wherein the end of the said second portion remote from the said pivot is provided with a plurality of spaced apertures each or any of which is adapted to be engaged by a fixed member attached to the towing means of the second vehicle, whereby the effective length of the said second portion can be increased or decreased at will.

5.        A vehicle as claimed in claim 1 or claim 2, wherein the said second portion comprises telescopically slidable portions

0025662

B 30960

adapted to be maintained in any desired position relative to one another, whereby the effective length of the said second portion can be increased or decreased at will.

6.      A vehicle as claimed in any one of the preceding claims, wherein the said first portion is pivotably connected to a pivot comprising a substantially vertical pivot pin at any one of a plurality of positions along the vertical length of said pivot pin.

7.      A vehicle as claimed in claim 6, including a plurality of spacing collars for addition to or removal from the said vertical pivot pin, whereby to raise or lower the height at which the said first portion is pivotably connected to the said pivot pin.

8.      A vehicle as claimed in claim 6 or claim 7, wherein the said vertical pivot pin is integral with the said second portion of the towing means of the vehicle.

9.      A vehicle provided with towing means substantially as hereinbefore described with reference to Figures 3 to 5 of the accompanying drawings.

Fig. 1.

1/5

0025662

Fig. 2.

Fig. 3.

*Fig. 3A.*

*Fig. 4.*

Fig. 5.

## DOCUMENTS CONSIDERED TO BE RELEVANT

| Category | Citation of document with indication, where appropriate, of relevant passages | Relevant to claim |
|---|---|---|
| | FR - A - 1 024 411 (J.-E. PETIT) <br> * page 2, left column, line 36 to right column, line 46; fig. * <br> -- <br> H. BUSCHMANN et al., <br> "Taschenbuch für den Kraftfahrzeug-Ingenieur" 7. Auflage <br> 1963, DEUTSCHE VERLAGSANSTALT, Stuttgart <br> * pages 641 to 642; fig. 149 * <br> -- <br> CH - A - 333 764 (MASCHINENFABRIK FAHR) <br> * page 1, lines 15 to 20; fig. * <br> -- | 1,2 <br><br><br><br> 1 <br><br><br><br><br><br><br> 4,5 |
| A | DE - C - 442 999 (G. SEITZ) <br> ---- | |

**CLASSIFICATION OF THE APPLICATION (Int. Cl.3)**

B 60 D    1/00

**TECHNICAL FIELDS SEARCHED (Int.Cl.3)**

B 60 D    1/00
B 62 D    15/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | | | |
|---|---|---|---|
| X | The present search report has been drawn up for all claims | | |

| Place of search | Date of completion of the search | Examiner |
|---|---|---|
| Berlin | 05-12-1980 | LEITZ |

EPO Form 1503.1   06.78